Europäisches Patentamt

European Patent Office

Office européen des brevets

(11) Numéro de publication: **0 463 983 B1**

## FASCICULE DE BREVET EUROPEEN

(45) Date de publication de fascicule du brevet: **02.11.94**

(51) Int. Cl.⁵: **B65D 21/02**, B65D 6/08, B65D 61/00

(21) Numéro de dépôt: **91460034.1**

(22) Date de dépôt: **11.06.91**

(54) **Ensembles empilables de récipients destinés à contenir des produits alimentaires pendant leur cuisson.**

(30) Priorité: **22.06.90 FR 9008061**

(43) Date de publication de la demande:
**02.01.92 Bulletin 92/01**

(45) Mention de la délivrance du brevet:
**02.11.94 Bulletin 94/44**

(84) Etats contractants désignés:
**AT BE CH DE DK ES GB GR IT LI LU NL SE**

(56) Documents cités:
**EP-A- 0 292 417**
**DE-A- 2 354 700**
**FR-A- 2 601 653**
**GB-A- 1 203 217**
**NL-A- 188 203**

(73) Titulaire: **ARMOR-INOX SA**
**Route de Dinan**
**Boîte Postale 16**
**F-56430 Mauron (FR)**

(72) Inventeur: **Dreâno, Claude**
**Route de Perhan**
**F-56490 Guilliers (FR)**

(74) Mandataire: **Le Guen, Louis François**
**Cabinet Louis Le Guen**
**38, rue Levavasseur**
**B.P. 91**
**F-35802 Dinard Cédex (FR)**

## Description

L'invention concerne des ensembles empilables de récipients correspondant au préambule de la revendication 1 destinés à contenir des produits alimentaires, tels que, par exemple, des jambons, durant leur cuisson dans des cellules.

On connaît déjà de tels ensembles de récipients et l'on citera, à titre d'exemple, le document FR-A-2 615 484.

Dans ce document, chaque ensemble comporte des goulottes longitudinales disposées côte à côte, deux plaques transversales reliées aux bords frontaux de ces goulottes et deux supports latéraux. Ceux-ci sont prévus pour supporter la goulotte externe correspondante. Ils sont respectivement formés de deux pieds qui, vus de côté, sont rectilignes et inclinés, alors que vus de l'avant ou de l'arrière, ils présentent trois parties. Les extrémités supérieures des pieds sont reliées par des barres et le pied avant et le pied arrière comportent des butées. Les butées d'un ensemble sont prévues pour recevoir, par leurs faces inférieures, les faces supérieures des barres d'un autre ensemble placé au-dessous du premier, déterminant ainsi la distance entre deux ensembles consécutifs d'une pile et maintenant longitudinalement chaque ensemble empilé en butée.

Après la cuisson de certains produits alimentaires dans de tels ensembles de récipients, il est parfois nécessaire de faire rendre le gras à ces produits. Pour ce faire, on exerce sur eux une certaine pression.

Le but de l'invention est de prévoir un ensemble de récipients qui soit, comme celui de l'art antérieur décrit ci-dessus, empilable avec d'autres du même type, mais qui peut présenter deux positions d'empilement. Dans la première position, les produits contenus dans des goulottes peuvent être cuits normalement et, dans la seconde position, ils sont comprimés.

L'invention concerne donc un ensemble de supports et de récipients constitués d'une pluralité de goulottes longitudinales disposées côte à côte et solidarisées, à l'avant et à l'arrière, par des plaques d'extrémité, d'un premier support sur lequel est fixée la face latérale externe d'une des deux goulottes externes et d'un second support sur lequel est fixée la face latérale externe de l'autre goulotte externe, chaque support étant constitué d'un pied avant et d'un pied arrière réunis par une barre longitudinale.

Selon une première caractéristique de l'invention, le premier support est d'un premier type et est pourvu, dans sa partie supérieure, d'au moins une surface supérieure dans un premier plan horizontal et, sur ses pieds, d'au moins un taquet dont la face inférieure est dans un second plan horizontal, et le second support est d'un second type et est pourvu, dans sa partie supérieure, d'au moins une surface dans un troisième plan horizontal et d'au moins une surface dans un quatrième plan horizontal respectivement au-dessous et au-dessus du premier plan du premier support, et, sur ses pieds, d'au moins un taquet dont la face inférieure est dans un cinquième plan horizontal au-dessous du second plan, la distance entre le premier plan et le troisième plan étant égale à une valeur prédéterminée égale à la distance entre le second plan et le cinquième plan, la distance entre le troisième plan et le quatrième plan étant double de ladite valeur, la surface dans le premier plan d'un support de premier type étant prévue pour pouvoir recevoir la surface inférieure du taquet du support de premier type et le taquet du support de second type d'un autre ensemble, alors que la surface dans le quatrième plan d'un support de second type est prévue pour pouvoir recevoir la surface inférieure du taquet du support de premier type d'un autre ensemble et que la surface dans le troisième plan d'un support de second type est prévue pour pouvoir recevoir la surface inférieure du taquet du support de second type d'un autre ensemble de supports et de récipients, de façon que l'empilage puisse être réalisé en plaçant soit deux supports de même type l'un sur l'autre, soit un support d'un type sur un support de l'autre type, de façon à rendre possibles deux distances différentes entre les goulottes superposées.

Ainsi, lorsqu'on empile deux éléments de manière que les supports d'un premier type reçoivent les supports d'un premier type et les supports d'un second type les supports d'un second type, ces deux éléments sont séparés verticalement d'une première distance alors que, lorsqu'on les empile de manière qu'un support de premier type reçoive un support de second type, et qu'un support de second type reçoive un support de premier type, ces deux éléments sont séparés verticalement d'une distance supérieure à la première distance. On montrera, dans la suite de la description, que cette différence est égale à la valeur prédéterminée de la distance qui sépare le second plan et le cinquième plan et le premier du quatrième.

Selon une caractéristique de l'invention, le support de premier type est pourvu, sur les faces en regard l'une de l'autre de ses deux pieds, de deux taquets dont les faces inférieures sont dans le deuxième plan horizontal et le support de second type est pourvu, sur les faces en regard l'une de l'autre de ses pieds, de deux taquets comportant respectivement deux faces d'appui qui se trouvent dans le cinquième plan horizontal.

Cette caractéristique présente un mode de réalisation préféré de l'invention dans lequel, les taquets des pieds de l'ensemble étant tournés vers l'intérieur de chaque support, les pieds forment les côtés externes de l'ensemble de l'invention.

Selon une autre caractéristique de l'invention, le support de second type comporte deux surfaces dans le troisième plan qui sont respectivement à l'avant et à l'arrière de la surface du quatrième plan, la distance qui sépare les bords externes de la surface du quatrième plan étant supérieure à la distance qui sépare les faces latérales en regard l'une de l'autre des taquets d'un support de premier type et étant inférieure à la distance qui sépare les faces latérales en regard l'une de l'autre des taquets d'un support de second type.

Ainsi, lorsqu'on empile deux ensembles de manière qu'un support de premier type coiffe un support de second type, les surfaces du second plan prennent appui sur les surfaces du quatrième plan, alors que, lorsque deux ensembles sont empilés de manière qu'un support de second type coiffe un autre support de second type, les surfaces du cinquième plan reposent sur les surfaces du troisième plan.

Selon une autre caractéristique de l'invention, le bord supérieur des barres reliant les pieds des supports forme les surfaces dans le troisième plan, la surface du premier plan étant formée par la face supérieure d'au moins une butée verticale reposant sur ladite barre du support du premier type et la surface du quatrième plan étant formée par la face supérieure d'au moins une butée verticale reposant sur la barre du support de second type.

Ainsi, selon cette caractéristique, on prévoit un mode de réalisation préféré de l'invention qui présente l'avantage, sur d'autres modes envisageables, d'être de contruction plus aisée.

Selon une autre caractéristique de l'invention, les pieds de chaque support sont inclinés de manière que chaque support s'évase vers le bas.

Selon une autre caractéristique de l'invention, le support de second type comprend deux butées comportant, dans leur partie supérieure, des faces de guidage inclinées par rapport à la verticale et tournées respectivement vers l'avant et vers l'arrière, la distance qui sépare leur base sur leurs surfaces horizontales supérieures étant sensiblement égale à la distance qui sépare les faces latérales en regard l'une de l'autre des taquets du support de premier type.

Selon une autre caractéristique, le support de second type comprend, dans sa partie supérieure, des surfaces de guidage latérales inclinées et des surfaces inclinées de même pente sur les taquets du même support, lesdites surfaces d'un premier élément pouvant venir en contact avec lesdites surfaces inclinées des taquets d'un support de second type d'un autre élément empilé sur le premier.

Selon une autre caractéristique de l'invention, la surface dans le premier plan est formée par la face supérieure d'au moins une butée dont les faces latérales externes forment, avec sa face supérieure, des arêtes qui se trouvent dans les mêmes plans verticaux transversaux que les arêtes respectivement formées à l'intersection des faces inférieures des taquets et des faces en regard l'une de l'autre des pieds, lesdites surfaces latérales d'un ensemble pouvant venir en contact avec les faces en regard l'une de l'autre des pieds sous le taquet du support du premier type d'un autre ensemble empilé sur le premier ensemble.

Selon une autre caractéristique de l'invention, les taquets du support de second type sont respectivement pourvus de surfaces de guidage inclinées, lesdites surfaces de guidage d'un ensemble pouvant venir en contact des faces latérales externes de la butée du support de premier type d'un autre ensemble sur lequel il est empilé.

Ces caractéristiques permettent aux supports de se guider eux-mêmes lors de l'empilage de deux éléments et d'être maintenus, une fois empilés, dans une position déterminée, et ce de manière stable.

Selon une autre caractéristique de l'invention, la butée du support de premier type est constituée de deux butées verticales en prolongement des pieds.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue en perspective d'un élément de supports et de récipients selon l'invention, et

les Fig. 2 à 4 sont des vues de côté de supports empilés, la Fig. 2 présentant deux supports d'un premier type empilés, la Fig. 3 deux supports d'un second type empilés, et la Fig. 4 trois supports empilés de manière alternée, premier type - second type - premier type.

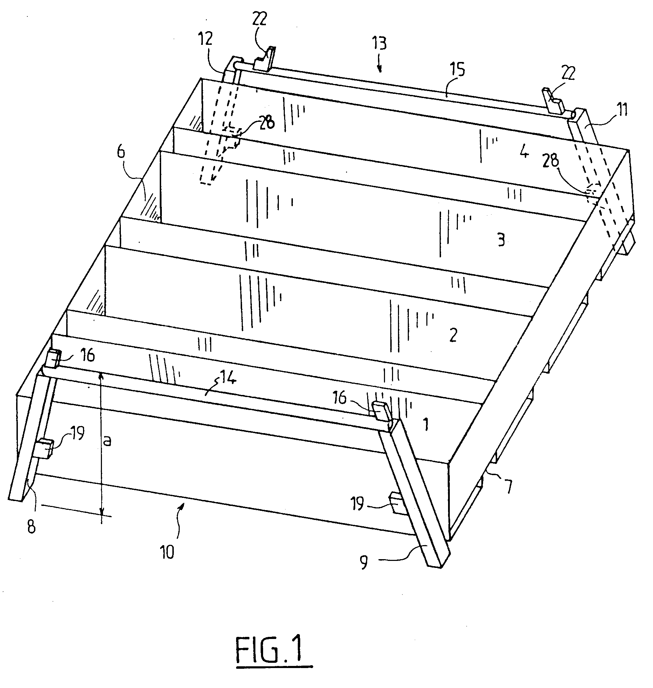

L'ensemble empilable représenté à la Fig. 1 comprend quatre récipients 1 à 4 sous forme de goulottes longitudinales à profil en "U". Ils sont disposés côte à côte et sont solidarisés par une plaque verticale avant 5 et une plaque verticale arrière 6. Ces plaques ont leurs arêtes supérieures sensiblement au même niveau que celles des parois latérales des goulottes 1 à 4, mais leurs arêtes inférieures 7 sont légèrement au-dessus des fonds des goulottes 1 à 4 afin de ménager un passage et permettre l'écoulement des jus de cuisson.

A la paroi latérale externe de la goulotte 1, sont soudés, près de ses extrémités, deux pieds 8 et 9 identiques et constituant un premier support 10. De même, à la paroi latérale externe de la goulotte externe 4, sont soudés deux pieds 11 et 12 identiques d'un second support 13. Pour des raisons de commodités, le support 10 est dit, par la suite, support de premier type ou de type A, alors que le support 13 est dit support de second type ou de type B.

Chaque support 10, 13 est dans un plan vertical. Dans ce plan, les deux pieds 8 et 9 du support 10 sont inclinés longitudinalement de manière que le support 10 ait une forme qui s'évase vers le bas. De même, dans le plan vertical qui contient le support 13, les pieds 11 et 12 sont inclinés de manière que le support 13 soit évasé vers le bas. De préférence, les bases des pieds 8 et 9 du support 10 et des pieds 11 et 12 du support 13 ne dépassent pas les extrémités des goulottes 1 à 4.

Les extrémités supérieures des deux pieds 8 et 9 sont respectivement soudées aux deux extrémités d'une barre longitudinale horizontale 14. De même, les extrémités des pieds 11 et 12 sont soudées aux extrémités d'une barre longitudinale horizontale 15. De préférence, les barres 14 et 15 sont de section circulaire et ont un diamètre sensiblement égal à l'épaisseur transversale des pieds 8 et 9 et 11 et 12. Les hauteurs de leurs bords supérieurs par rapport aux surfaces inférieures des bases des pieds ont une valeur prédéterminée $\underline{a}$.

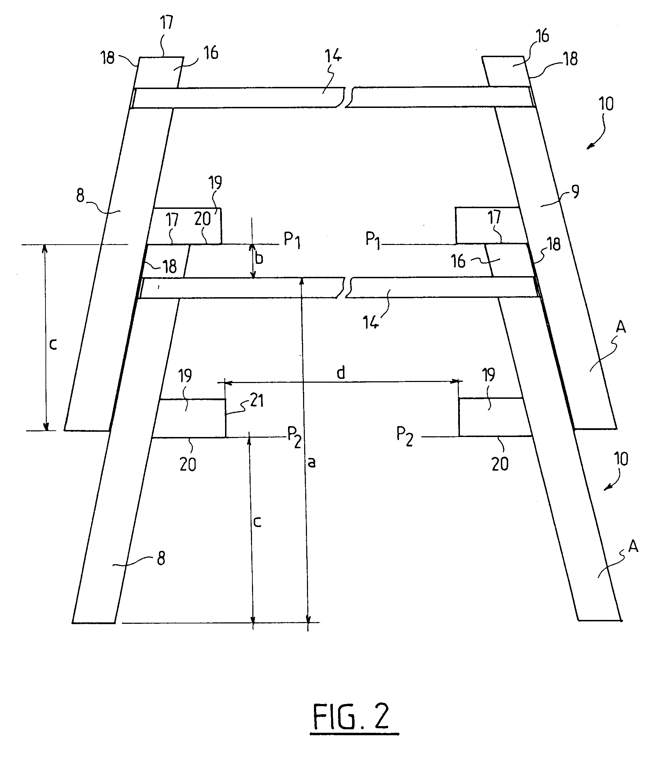

A la Fig. 2, on a représenté deux supports 10 (support du type A) empilés. On a volontairement omis de représenter les faces externes des goulottes 1 pour la clareté de cette Fig.

Chaque support 10 est montré avec ses deux pieds 8 et 9 et sa barre horizontale 14. Sur celle-ci, en prolongement de chacun des pieds 8 et 9, sont soudées deux butées verticales 16 formées de plaques dont la face supérieure 17 est dans un premier plan horizontal $P_1$ et dont la face latérale externe 18 est en prolongement de la face latérale externe du pied 8 ou 9 du même côté. La hauteur de chaque butée 16 est $\underline{b}$.

Les faces en regard l'une de l'autre des pieds 8 et 9 portent respectivement des taquets 19 symétriques l'un de l'autre par rapport à l'axe médian du support 10. Ils sont formés de plaques verticales dont les faces inférieures 20 sont dans un second plan horizontal $P_2$ situé à une hauteur $\underline{c}$ de la surface inférieure des pieds 8 et 9 et dont leurs faces en regard l'une de l'autre 21 sont, chacune, dans un plan sensiblement vertical à une distance $\underline{d}$ l'une de l'autre.

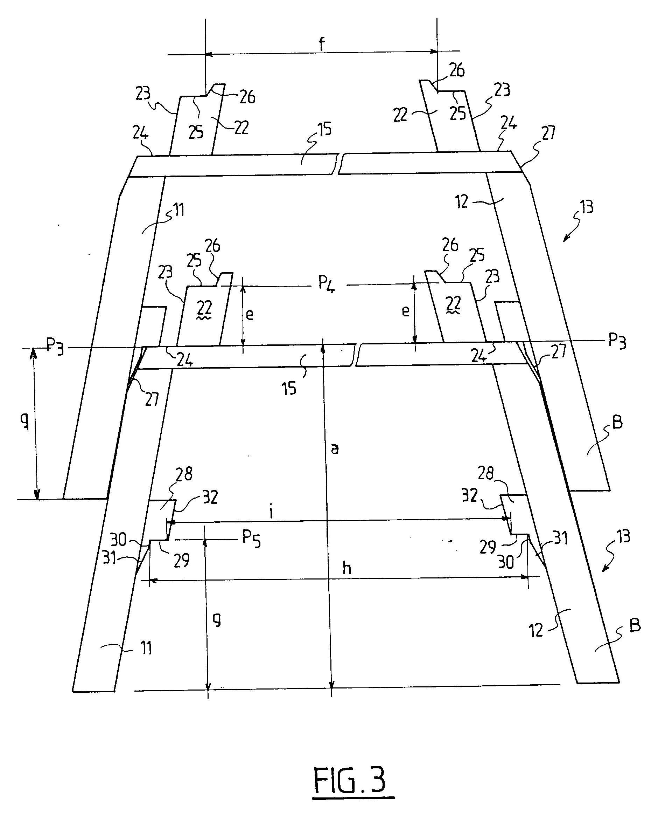

A la Fig. 3, on voit deux supports 13 empilés avec, chacun, ses deux pieds 11 et 12 et sa barre horizontale 15. Sur celle-ci, sont soudées deux butées verticales 22 symétriques l'une de l'autre par rapport à l'axe médian du support 13. La distance qui sépare les faces externes sensiblement verticales 23 des butées 22 est inférieure à la longueur de la barre longitudinale 15. Ainsi, sont aménagées, sur le bord supérieur de la barre 15, à chacune de ses extrémités, deux surfaces d'appui 24 dans un troisième plan horizontal $P_3$ situé à une hauteur $\underline{a}$ par rapport à la surface inférieure des pieds 11 et 12.

Les parties supérieures des butées 22 sont constituées, d'une part, de surfaces horizontales 25 et de surfaces 26 inclinées par rapport à la verticale. Les surfaces horizontales 25 appartiennent à un quatrième plan $P_4$ dont la hauteur par rapport au bord supérieur de la barre 15 est $\underline{e}$. Les surfaces 26 sont inclinées par rapport à la verticale vers les surfaces horizontales 25. Elles sont respectivement tournées vers l'avant et l'arrière du support 13 et ont leurs bases séparées d'une distance $\underline{f}$.

Les pieds 11 et 12 et la barre 15 sont prévus pour présenter deux surfaces latérales 27 dans des plans transversaux symétriques l'une de l'autre par rapport à un axe médian du support 13 et inclinés avec une pente supérieure à celle des faces latérales externes des pieds 11 et 12.

Les faces en regard l'une de l'autre des pieds 11, 12 portent respectivement des taquets 28 symétriques l'un de l'autre par rapport à l'axe médian du support 13. La partie inférieure de chaque taquet 28 est composée de trois surfaces: une surface 29 dans un cinquième plan horizontal $P_5$ à une hauteur $\underline{g}$ de la surface inférieure des pieds 11, 12, une surface 30 dans un plan transversal sensiblement vertical et une surface 31 dans un plan transversal incliné. Les surfaces 31 ont une inclinaison de même pente que les surfaces latérales 27. Les surfaces 31 sont inclinées avec une pente sensiblement égale à celle des pieds 11 et 12. Elles sont séparées d'une distance $\underline{h}$.

Les taquets 28 ont les bases de leurs surfaces latérales 32 qui sont espacées d'une distance $\underline{i}$.

Lorsqu'on empile deux ensembles selon l'invention, on a deux possibilités: ou l'on empile les ensembles de manière que des supports 10 de type A s'engagent avec des supports 10 de type A et des supports 13 de type B avec des supports 13 de type B, ou de manière alternée, des supports 10 de type A s'engageant avec des supports 13 de type B et vice versa.

La Fig. 2 montre deux supports 10 de type A empilés. Les faces inférieures 20 des taquets 19 de l'ensemble supérieur sont en appui sur les faces supérieures 17 des butées 16 de l'ensemble inférieur. On peut constater que la distance qui sépare les surfaces inférieures des bases des pieds 8 et 9 des deux ensembles est égale à $\underline{a}$ + $\underline{b}$ - $\underline{c}$. Par ailleurs, les surfaces latérales 18 des butées 16 de l'ensemble inférieur sont en contact avec les faces en regard l'une de l'autre des pieds 8 et 9 de l'ensemble supérieur. Pour ce faire, les arêtes formées entre les faces 17 et les faces 18 des butées 16 sont respectivement dans des mêmes plans verticaux transversaux que les arêtes formées entre les faces 20 des taquets 19 et les faces internes des pieds 8 ou 9.

Lorsque des supports de type A sont empilés d'un côté, de l'autre côté, sont empilés des supports 13 de type B. La Fig. 3 montre un tel empilement de deux ensembles. Les surfaces horizontales 29 des taquets 28 de l'ensemble supérieur sont en appui sur les surfaces d'appui 24 de la barre 15 de l'ensemble inférieur. Les surfaces inférieures des pieds 11 et 12 des deux ensembles sont distantes de $a$ - $g$, qui doit nécessairement être égal à la distance qui sépare les surfaces inférieures des pieds 8 et 9 de deux supports de type A empilés, c'est-à-dire $a$ + $b$ - $c$. Par ailleurs, les surfaces inclinées 31 des taquets 28 sont en contact avec les surfaces biseautées 27, ce qui assure un centrage longitudinal des ensembles empilés, et facilite leur empilage en guidant un ensemble par rapport à celui qui sera en dessous de lui.

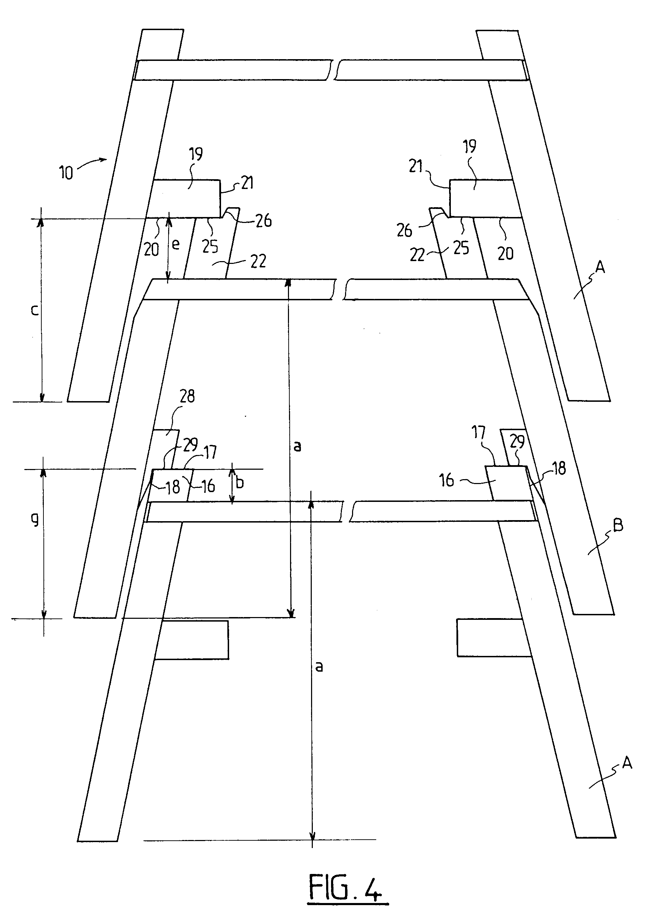

La Fig. 4 montre un empilement de trois ensembles alterné: un support 10 de type A coiffe un support 13 de type B coiffant lui-même un support 10 de type A. On voit que les taquets 19 du support 10 supérieur ont leurs surfaces inférieures 20 qui prennent appui sur les surfaces horizontales 25 des butées 22 du support de type B. La distance qui sépare les surfaces inférieures des pieds de ces deux ensembles est alors de $a$ + $e$ - $c$. Les arêtes formées par les faces 21 des taquets 19 et leurs faces inférieures 20 se trouvent dans les coins formés à l'intersection des surfaces horizontales 25 et des surfaces inclinées 26 des butées 22 du support 13 de type B. Pour ce faire, la distance $f$ est égale à la distance $d$. Cela assure un bon calage longitudinal des supports de type A sur les supports de type B et facilite leur empilage.

Les surfaces horizontales 29 des taquets 28 d'un support 13 de type B sont en appui sur les surfaces supérieures 17 des butées 16 du support de type A en dessous du support 13 de type B. La distance entre les surfaces inférieures des pieds est alors de $a$ + $b$ - $g$, qui doit nécessairement être égale à $a$ + $e$ - $c$. Les surfaces latérales externes 18 des butées 16 d'un support de type A sont en contact, au jeu près, avec les surfaces 30 des taquets 28 du support de type B au-dessus de lui. Ceci permet d'avoir, d'une part, un guidage lors de l'empilage et, d'autre part, un positionnement correct dans le sens longitudinal.

Dans un empilement A-A (Fig. 2) ou B-B (Fig. 3), les ensembles sont distants de $a$ + $b$ - $c$ = $a$ + $e$ - $g$ et dans un empilement A-B ou B-A (Fig. 4), les ensembles sont distants de $a$ + $b$ - $g$ = $a$ + $e$ - $c$. La différence des hauteurs, par rapport aux surfaces inférieures de leurs pieds, d'une part, des surfaces horizontales 20 des taquets 19 d'un support de type A et, d'autre part, des surfaces 29 des taquets 28 d'un support B, est égale à $c$ - $g$, ce qui correspond à la différence entre la distance $a$ + $e$ -$g$ entre ensembles empilés selon A-A ou B-B et la distance $a$ + $e$ -$c$ entre ensembles empilés selon A-B ou B-A. La valeur $c$ - $g$ est aussi égale à la hauteur $b$ des butées 16 d'un support de type A et on peut également montrer que la hauteur $e$ est double de la hauteur $b$.

Empilés dans un sens ou dans l'autre, les ensembles ont leurs goulottes qui se superposent.

Les ensembles selon l'invention peuvent être utilisés comme suit. Les produits alimentaires à cuire sont disposés dans les goulottes d'un premier ensemble et, les goulottes une fois pleines, un second ensemble vient coiffer le premier, dans une position telle que les supports A viennent sur les supports B et vice versa. On remplit le second ensemble et on pose, sur celui-ci, un troisième ensemble de la même manière. Dans la position où ils sont empilés, les goulottes sont à une distance maximale entre elles, en fait égale à $a$ + $e$ - $g$. Les distances entre goulottes superposées sont telles que, dans cette position, les produits alimentaires dans une goulotte ne sont pas en contact avec le fond de la goulotte au-dessus d'elle.

Les produits sont alors cuits dans une cellule de cuisson. Cette cuisson terminée, on fait tourner un ensemble sur deux de 180° de manière que, de chaque côté, les supports alternent A-B-A etc. La distance entre goulottes superposées est égale à $a$ + $e$ - $c$, c'est-à-dire inférieure au cas précédent d'une valeur égale à $b$ comme démontré précédemment. Les distances entre goulottes superposées sont telles que dans cette position, les produits alimentaires sont pressés et peuvent rendre leur jus.

## Revendications

1. Ensemble de supports et de récipients constitués d'une pluralité de goulottes longitudinales (1 à 4) disposées côte à côte et solidartsées, à l'avant et à l'arrière, par des plaques d'extrémité (6 et 7), d'un premier support (10) sur lequel est fixée la face latérale externe d'une des deux goulottes externes (1) et d'un second support (13) sur lequel est fixée la face latérale externe de l'autre goulotte externe (4), chaque support (10 ou 13) étant constitué d'un pied avant (9, 11) et d'un pied arrière (8, 12) réunis par une barre longitudinale (14, 15), caractérisé en ce que le premier support (10) est d'un premier type (A) et est pourvu, dans sa partie supérieure, d'au moins une surface supérieure (17) dans un premier plan horizontal $P_1$ et, sur ses pieds (8, 9), d'au moins un taquet (19) dont la face inférieure (20) est dans un second

plan horizontal $P_2$, et le second support (13) est d'un second type (B) et est pourvu, dans sa partie supérieure, d'au moins une surface (24) dans un troisième plan horizontal $P_3$ et d'au moins une surface (25) dans un quatrième plan horizontal $P_4$ respectivement au-dessous et au-dessus du premier plan $P_1$ du premier support (10), et, sur ses pieds (11, 12), d'au moins un taquet (28) dont la face inférieure (29) est dans un cinquième plan horizontal $P_5$ en dessous du second plan $P_2$, la distance $\underline{b}$ entre le premier plan $P_1$ et le troisième plan $P_3$ étant égale à une valeur pré déterminée égale à la distance ($\underline{c}$ - $\underline{g}$) entre le second plan $P_2$ et le cinquième plan $P_5$, la distance $\underline{e}$ entre le troisième plan $P_3$ et le quatrième plan $P_4$ étant double de ladite valeur $\underline{b}$, la surface (17) dans le premier plan $P_1$ d'un support (10) de premier type (A) étant prévue pour pouvoir recevoir la surface inférieure (20) du taquet (19) d'un autre support (10) de premier type (A) et la surface inférieure (29) du taquet (28) d'un support (13) de second type (B) d'un autre ensemble de supports et de récipients, alors que la surface (25) dans le quatrième plan $P_4$ d'un support (13) de second type (B) est prévue pour pouvoir recevoir la surface inférieure (20) du taquet (19) du support (10) de premier type (A) d'un autre ensemble de supports et de récipients et que la surface (24) dans le troisième plan $P_3$ d'un support (13) de second type (B) est pré vue pour pouvoir recevoir la surface inférieure (29) du taquet (28) du support (13) de second type (B) d'un autre ensemble de supports et de récipients, de façon que l'empilage puisse être réalisé en plaçant soit deux supports de même type l'un sur l'autre (A-A, B-B), soit un support d'un type sur un support de l'autre type (A-B, B-A), de façon à rendre possibles deux distances différentes entre les goulottes superposées.

2. Ensemble selon la revendication 1, caractérisé en ce que le support (10) de premier type est pourvu, sur les faces en regard l'une de l'autre de ses deux pieds (8, 9), de deux taquets (19) dont les faces inférieures (20) sont dans le deuxième plan horizontal $P_2$ et le support (13) de second type est pourvu, sur les faces en regard l'une de l'autre de ses deux pieds (11, 12), de deux taquets (28) comportant respectivement deux faces d'appui (29) dans le cinquième plan horizontal $P_5$.

3. Ensemble selon la revendication 2, caractérisé en ce que le support (13) de second type comporte deux surfaces (24) dans le troisième plan $P_3$ qui sont respectivement à l'avant et à l'arrière de la surface (25) dans le quatrième plan $P_4$, la distance qui sépare les bords externes de la surface (25) du quatrième plan $P_4$ étant supérieure à la distance $\underline{d}$ qui sépare les faces latérales (21) en regard l'une de l'autre des taquets (19) d'un support (10) de premier type et étant inférieure à la distance $\underline{i}$ qui sépare les faces latérales (32) en regard l'une de l'autre des taquets (28) d'un support (13) de second type.

4. Ensemble selon une des revendications précédentes, caractérisé en ce que le bord supérieur des barres (14, 15) reliant les pieds (8 et 9, 11 et 12) des supports (10, 13) forment des surfaces dans le troisième plan $P_3$ et, en particulier, la surface (24), la surface (17) dans le premier plan $P_1$ étant formée par la face supérieure d'au moins une butée verticale (16) reposant sur la barre (14) du support (10) du premier type et la surface (25) dans le quatrième plan $P_4$ étant formée par la face supérieure d'au moins une butée verticale (22) reposant sur la barre (15) du support (13) de second type.

5. Ensemble selon une des revendications 1 à 4, caractérisé en ce que les pieds (8 et 9, 11 et 12) de chaque support (10, 13) sont inclinés de manière que chaque support (10, 13) s'évase vers le bas.

6. Ensemble selon une des revendications 2 à 5, caractérisé en ce que le support (13) de second type comprend deux butées (22) comportant, dans leur partie supérieure, des faces de guidage (26) inclinées par rapport à la verticale et tournées respectivement vers l'avant et vers l'arrière du support, la distance $\underline{f}$ qui sépare leur base sur leurs surfaces horizontales supérieures (25) étant sensiblement égale, au jeu près, à la distance $\underline{d}$ qui sépare les faces latérales (21) en regard l'une de l'autre des taquets (19) du support (10) de premier type.

7. Ensemble selon une des revendications 2 à 6, caractérisé en ce que le support (13) de second type comprend, dans sa partie supérieure, des surfaces de guidage latérales (27) inclinées et des surfaces (31) inclinées de même pente sur ses taquets (28), lesdites surfaces (27) d'un premier élément pouvant venir en contact avec les surfaces inclinées (31) des taquets (28) d'un support (13) de second type d'un autre élément empilé sur lui.

**8.** Ensemble selon une des revendications 2 à 7, caractérisé en ce que la surface (17) dans le premier plan $P_1$ est formée par la face supérieure d'au moins une butée (16) dont les faces latérales externes (18) forment, avec sa face supérieure (17), des arêtes qui se trouvent dans les mêmes plans verticaux transversaux que les arêtes respectivement formées à l'intersection des faces inférieures (20) des taquets (19) et des faces en regard l'une de l'autre des pieds (8, 9), lesdites surfaces latérales (18) d'un ensemble pouvant venir en contact avec les faces en regard l'une de l'autre des pieds (8 et 9) sous les taquets (19) du support (10) du premier type d'un autre ensemble empilé sur le premier ensemble.

**9.** Ensemble selon une des revendications 2 à 8, caractérisé en ce que les taquets (28) du support (13) de second type sont respectivement pourvus de surfaces de guidage inclinées (30), lesdites surfaces (30) d'un ensemble pouvant venir en contact avec les faces latérales externes (18) de la butée (16) du support (10) de premier type d'un autre ensemble sur lequel il est empilé.

**10.** Ensemble selon une des revendications précédentes, caractérisé en ce que la butée (16) du support (10) de premier type est constituée de deux butées (16) verticales respectivement en prolongement des pieds (8 et 9).

**Claims**

**1.** Assembly of supports and receptacles constituted by a plurality of longitudinal channels (1 to 4) arranged side by side and joined, at the front and at the rear, by end plates (6 and 7), by a first support (10) to which the outer side face of one of the two outer channels (1) is attached and by a second support (13) to which the outer side face of the other outer channel (4) is attached, each support (10 or 13) being constituted by a front leg (9, 11) and a rear leg (8, 12) joined together by a longitudinal bar (14, 15), characterised in that the first support (10) is of a first type (A) and is provided, on its upper portion, with at least one upper surface (17) in a first horizontal plane $P_1$ and, on its legs (8, 9), with at least one peg (19) whose lower surface (20) is in a second horizontal plane $P_2$, and the second support (13) is of a second type (B) and is provided, on its upper portion, with at least one surface (24) in a third horizontal plane $P_3$ and at least one surface (25) in a fourth horizontal plane $P_4$, respectively below and above the first

plane $P_1$ of the first support (10), and, on its legs (11, 12), with at least one peg (28) whose lower surface (29) is in a fifth horizontal plane $P_5$ below the second plane $P_2$, the distance $\underline{b}$ between the first plane $P_1$ and the third plane $P_3$ being equal to a predetermined value equal to the distance $(\underline{c} - \underline{g})$ between the second plane $P_2$ and the fifth plane $P_5$, the distance $\underline{e}$ between the third plane $P_3$ and the fourth plane $P_4$ being twofold the said value $\underline{b}$, the surface (17) in the first plane $P_1$ of a support (10) of the first type (A) being adapted to be able to receive the lower face (20) of the peg (19) of another support (10) of the first type (A) and the lower face (29) of the peg (28) of a support (13) of the second type (B) of another assembly of supports and receptacles, whereas surface (25) in the fourth plane $P_4$ of a support (13) of the second type (B) is adapted to be able to receive the lower surface (20) of the peg (19) of support (10) of the first type (A) of another assembly of supports and receptacles and the surface (24) in the third plane $P_3$ of a support (13) of the second type (B) is adapted to be able to receive the lower surface (29) of the peg (28) of support (13) of the second type (B) of another assembly of supports and receptacles, in such a way that the stacking may be effected by placing either two supports of the same type one of top of the other (A-A, B-B), or a support of one type on a support of the other type (A-B, B-A), in such a way as to render two different distances between the superposed channels possible.

**2.** Assembly according to claim 1, characterised in that the support (10) of the first type is provided, on the facing surfaces of its two legs (8, 9), with two pegs (19) whose lower surfaces (20) are in the second horizontal plane $P_2$ and the support (13) of the second type is provided, on the facing surfaces of its two legs (11, 12), with two pegs (28) respectively comprising two support surfaces (29) in the fifth horizontal plane $P_5$.

**3.** Assembly according to claim 2, characterised in that the support (13) of the second type comprises two surfaces (24) in the third plane $P_3$ which respectively are in front of and behind the surface (25) in the fourth plane $P_4$, the distance separating the outer edges of the surface (25) in the fourth plane $P_4$ being greater than the distance $\underline{d}$ separating the facing side faces (32) of the pegs (28) of a support of the second type.

4. Assembly according to any of the preceding claims, characterised in that the upper edge of the bars (14, 15) connecting the legs (8 and 9, 11 and 12) of the supports (10, 13) form surfaces in the third plane $P_3$ and, in particular, surface (24), surface (17) in the first plane $P_1$ being formed by the upper surface of at least one vertical abutment (16) placed on the bar (14) of the support (10) of the first type and the surface (25) in the fourth plane being formed by the upper surface of at least one vertical abutment (22) placed on the bar (15) of the support (13) of the second type.

5. Assembly according to any of claims 1 to 4, characterised in that the legs (8 and 9, 11 and 12) of each support (10, 13) are inclined in such a way that each support (10, 13) widens downwards.

6. Assembly according to any of claims 2 to 5, characterised in that each support (13) of the second type includes two abutments (22) comprising, on their upper portion, guide surfaces (26), inclined to the vertical and respectively facing to the front and the rear of the support, the distance $\underline{f}$ separating their base on their upper horizontal surfaces (25) being approximately equal, with the exception of the play, to the distance $\underline{d}$ separating the facing side faces (21) of the pegs (19) on the support (10) of the first type.

7. Assembly according to any of claims 2 to 6 characterised in that the support (13) of the second type includes, on its upper portion, inclined lateral guide surfaces (27) and surfaces (31) inclined at the same pitch on its pegs (28), said surfaces (27) of a first element being able to come into contact with the inclined surfaces (31) on the pegs (28) of a support (13) of the second type of another element stacked thereon.

8. Assembly according to any of claims 2 to 7, characterised in that the surface (17) in the first plane $P_1$ is formed by the upper surface of at least one abutment (16) whose outer side faces (18) form, together with its upper surface (17), ribs which are located in the same vertical transverse planes as the ribs respectively formed at the intersection between the lower surfaces (20) of the pegs (19) and the facing surfaces of the legs (8, 9), said side faces (18) of an assembly being able to come into contact with the facing surfaces of the legs (8 and 9) below the pegs (19) of the support (10) of the first type of another assembly stacked on top of the first assembly.

9. Assembly according to any of claims 2 to 8, characterised in that the pegs (28) of the support (13) of the second type respectively are provided with inclined guide faces (30), said faces (30) of an assembly being able to come into contact with the outer side faces (18) on the abutment (16) of the support (10) of the first type of another assembly on which it is stacked.

10. Assembly according to any of the preceding claims, characterised in that the abutment (16) on the support (10) of the first type is constituted by two vertical abutments (16) which respectively are in the prolongation of the legs (8 and 9).

**Patentansprüche**

1. Einheit mit Trägern und Behältern, gebildet durch eine Vielzahl von länglichen Fächern (1 bis 4), die nebeneinander angeordnet und am vorderen und am hinteren Ende durch Endplatten ( 6 und 7) miteinander verbunden sind, durch einen ersten Träger (10), auf dem die äußere Seitenfläche einer der zwei äußeren Fächer (1) befestigt ist, und durch einen zweiten Träger (13), auf dem die äußere Seitenfläche des anderen äußeren Faches (4) befestigt ist, wobei jeder Träger (10 oder 13) durch einen vorderen Fuß (9, 11) und einen hinteren Fuß (8, 12) gebildet ist, die jeweils durch einen länglichen Stab (14, 15) miteinander verbunden sind, **dadurch gekennzeichnet**, daß der erste Träger (10) von einem ersten Typ (A) ist und an seinem oberen Teil mit einer ersten horizontalen Ebene $P_1$ mit wenigstens einer oberen Oberfläche (17) und an seinen Füßen (8, 9) mit wenigstens einem Ausleger (19) versehen ist, dessen untere Fläche (20) in einer zweiten horizontalen Ebene $P_2$ liegt, daß der zweite Träger (13) von einem zweiten Typ (B) ist und an seinem oberen Teil mit wenigstens einer Oberfläche (24) in einer dritten horizontalen Ebene $P_3$ und wenigstens mit einer Oberfläche (25) in einer vierten horizontalen Ebene $P_4$ jeweils unterhalb und oberhalb der ersten Ebene $P_1$ des ersten Trägers (10) und auf seinen Füßen (11, 12) mit wenigstens einem Ausleger (28) versehen ist, dessen untere Fläche (29) in einer fünften horizontalen Ebene $P_5$ unterhalb der zweiten Ebene $P_2$ liegt, wobei der Abstand $\underline{b}$ zwischen der ersten Ebene $P_1$ und der dritten Ebene $P_3$ gleich einem vorbestimmten Wert ist, der gleich dem Abstand ($\underline{c}$ - $\underline{g}$) zwischen der zweiten Ebene $P_2$ und der

fünften Ebene $P_5$ und der Abstand $\underline{e}$ zwischen der dritten Ebene $P_3$ und der vierten Ebene $P_4$ gleich dem Doppelten des genannten Wertes $\underline{b}$ ist und die Oberfläche (17) in der ersten Ebene $P_1$ eines Trägers (10) vom ersten Typ (A) dafür vorgesehen ist, die untere Oberfläche (20) des Auslegers (19) eines anderen Trägers (10) vom ersten Typ (A) aufzunehmen und die untere Oberfläche (29) des Auslegers (28) eines Trägers (13) vom zweiten Typ (B) einer anderen Einheit aus Trägern und Behältern aufzunehmen, während die Oberfläche (25) in der vierten Ebene $P_4$ eines Trägers (13) vom zweigen Typ (B) dafür vorgesehen ist, die untere Oberfläche (20) des Auslegers (19) des Trägers (10) vom ersten Typ (A) einer anderen Einheit aus Trägern und Behältern aufzunehmen, und daß die Oberfläche (24) in der dritten Ebene $P_3$ eines Trägers (13) vom zweiten Typ (B) dafür vorgesehen ist, die untere Oberfläche (29) des Auslegers (28) des Trägers (13) vom zweiten Typ (B) einer anderen Einheit aus Trägern und Behältern aufzunehmen, derart, daß der Stapel dadurch gebildet werden kann, daß zwei Träger vom selben Typ aufeinander (A-A, B-B) angeordnet werden können, indem entweder zwei Träger vom selben Typ (A-A, B-B) übereinander oder ein Träger von einem Typ über einem Träger vom anderen Typ (A-B, B-A) angeordnet werden, derart, daß zwei unterschiedliche Abstände zwischen den übereinander angeordneten Fächern ermöglicht werden.

2. Einheit nach Anspruch 1, **dadurch gekennzeichnet**, daß der Träger (10) vom ersten Typ auf den einander gegenüberliegenden Flächen seiner zwei Füße (8, 9) mit zwei Auslegern (19) versehen ist, deren untere Flächen (20) in der zweiten horizontalen Ebene $P_2$ liegen, und daß der Träger (13) vom zweiten Typ auf den einander gegenüberliegenden Flächen seiner zwei Füße (11, 12) mit zwei Auslegern (28) versehen ist, die je zwei Stützflächen (29) in der fünften horizontalen Ebene $P_5$ enthalten.

3. Einheit nach Anspruch 2, **dadurch gekennzeichnet**, daß der Träger (13) vom zweiten Typ zwei Oberflächen (24) in der dritten Ebene $P_3$ enthält, die am vorderen Ende bzw. am hinteren Ende der Oberfläche (25) in der vierten Ebene $P_4$ liegen, wobei der Abstand zwischen den äußeren Kanten der Oberfläche (25) der vierten Ebene $P_4$ größer ist als der Abstand $\underline{d}$ zwischen den einander gegenüberliegenden seitlichen Flächen (21) der Ausleger (19) eines Trägers (10) vom ersten Typ und kleiner ist als der Abstand $\underline{i}$ zwischen den einander gegenüberliegenden Seitenflächen (32) des anderen der Ausleger (28) eines Trägers (13) vom zweiten Typ.

4. Einheit nach einem der vorangehenden Ansprüche, **dadurch gekennzeichnet**, daß die obere Kante der die Füße (8 und 9, 11 und 12) der Träger (10, 13) verbindenden Stäbe (14, 15) Oberflächen in der dritten Ebene $P_3$ bildet und insbesondere die Oberfläche (24), die Oberfläche (17) in der ersten Ebene $P_1$ durch die obere Fläche wenigstens eines vertikalen Lagers (16) gebildet ist, das auf dem Stab (14) des Trägers (10) vom ersten Typ und der Oberfläche (25) in der vierten Ebene $P_4$ ruht, die durch die obere Fläche wenigstens eines vertikalen Lagers (22) gebildet ist, das auf dem Stab (15) des Trägers (13) vom zweiten Typ ruht.

5. Einheit nach einem der Ansprüche 1 - 4, **dadurch gekennzeichnet**, daß die Füße (8 und 9, 11 und 12) jedes Trägers (10, 13) derart geneigt sind, daß jeder Träger (10, 13) nach unten erweitert ist.

6. Einheit nach einem der Ansprüche 2 - 5, **dadurch gekennzeichnet**, daß der Träger (13) vom zweiten Typ zwei Lager (22) aufweist, die an ihrem oberen Teil Führungsflächen (26) enthalten, die relativ zur vertikalen geneigt und zum vorderen bzw. zum hinteren Ende des Trägers gerichtet sind, wobei der Abstand $\underline{f}$ zwischen ihren Grundflächen auf den horizontalen oberen Oberflächen (25) etwa mit geringem Spiel gleich ist dem Abstand $\underline{d}$ zwischen den einander gegenüberliegenden Seitenflächen (21) der Ausleger (19) des Trägers (10) vom ersten Typ.

7. Einheit nach einem der Ansprüche 2 - 6, **dadurch gekennzeichnet**, daß der Träger (13) vom zweiten Typ an seinem oberen Teil geneigte seitliche Führungsflächen (27) und auf seinen Auslegern (28) mit der gleichen Neigung geneigte Oberflächen (31) aufweist, wobei die genannten Oberflächen (27) eines ersten Elementes mit den geneigten Oberflächen (31) der Ausleger (28) eines Trägers (13) vom zweiten Typ eines anderen auf ihm aufgestapelten Elementes in Berührung gelangen können.

8. Einheit nach einem der Ansprüche 2 - 7, **dadurch gekennzeichnet**, daß die Oberfläche (17) in der ersten Ebene $P_1$ durch die obere Fläche wenigstens eines Lagers (16) gebildet ist, dessen äußere seitliche Flächen (18) zusammen mit seiner oberen Fläche (17) Anschläge bilden, die sich in denselben quer gerichteten vertikalen Ebenen befinden wie die entsprechenden Anschläge, die durch das Zusammenwirken der unteren Flächen (20) der Ausleger (19) und der einander gegenüberliegenden Flächen der Füße (8, 9) gebildet werden, wobei die genannten seitlichen Oberflächen (18) einer Einheit mit den einander gegenüberliegenden Flächen der Füße (8 und 9) unter den Auslegern (19) des Trägers (10) vom ersten Typ einer anderen auf die erste Einheit aufgestapelten Einheit in Berührung gelangen können.

9. Einheit nach einem der Ansprüche 2 - 8, **dadurch gekennzeichnet**, daß die Ausleger (28) des Trägers (13) vom zweiten Typ jeweils mit geneigten Führungs-Oberflächen (30) versehen sind, daß die genannten Oberflächen (30) einer Einheit mit den seitlichen äußeren Flächen (18) des Lagers (16) des Trägers (10) vom ersten Typ einer anderen Einheit, auf die er aufgestapelt ist, in Berührung gelangen können.

10. Einheit nach einem der vorangehenden Ansprüche, **dadurch gekennzeichnet**, daß das Lager (16) des Trägers (10) vom ersten Typ durch jeweils zwei durch Verlängerung der Füße (8 und 9) bewirkte vertikale Lager (16) gebildet ist.

FIG.1

FIG. 2

FIG.3

FIG. 4